## Europäisches Patentamt

## European Patent Office

## Office européen des brevets

(19)

(11) Veröffentlichungsnummer: **0 009 114**
**B1**

(12)

# EUROPÄISCHE PATENTSCHRIFT

(45) Veröffentlichungstag der Patentschrift:
**29.09.82**

(21) Anmeldenummer: **79102919.2**

(22) Anmeldetag: **11.08.79**

(51) Int. Cl.³: **B 29 B 1/06**

(54) **Mischvorrichtung für miteinander chemisch reagierende, vorzugsweise Polyurethan bildende, flüssige Komponenten.**

(30) Priorität: **06.09.78 DE 2838798**

(43) Veröffentlichungstag der Anmeldung:
**02.04.80 Patentblatt 80/7**

(45) Bekanntmachung des Hinweises auf die Patenterteilung:
**29.09.82 Patentblatt 82/39**

(84) Benannte Vertragsstaaten:
**DE FR GB IT NL**

(56) Entgegenhaltungen:
**DE-A1-2 616 010**
**DE-B2-2 007 935**
**DE-C3-2 117 533**
**US-A-4 082 512**

(73) Patentinhaber: **Elastogran Maschinenbau GmbH,
D-2844 Lemförde (DE)**

(72) Erfinder: **Wallner, Josef, Brauneckstrasse 2,
D-8150 Holzkirchen (DE)**
Erfinder: **Metzinger, Lothar, Dr.,
Heinrich-Pohlmann-Strasse 19, D-4500 Osnabrück (DE)**

(74) Vertreter: **von Raffay, Vincenz, Dipl.-Ing. et al,
Patentanwälte Dipl.-Ing. Vincenz v. Raffay Dipl.-Chem.
Dr. Hans D. Boeters Postfach 32 32 17,
D-2000 Hamburg 13 (DE)**

Mischvorrichtung für miteinander chemisch reagierende, vorzugsweise Polyurethan bildende, flüssige
Komponenten

Die Erfindung betrifft eine Mischvorrichtung für miteinander chemisch reagierende, vorzugsweise Polyurethan bildende, flüssige Komponenten, mit einer Mischkammer, die Eintrittsöffnungen für die einzelnen Komponenten und eine Austrittsöffnung für das Komponentengemisch besitzt, mit einem in der Mischkammer angeordneten und ihrem Querschnitt angepassten Steuerkolben, der aus einer die Eintrittsöffnungen offenlassenden Stellung bis in den Bereich der Austrittsöffnung, dabei die Eintrittsöffnungen gegenüber der Mischkammer absperrend, hin- und herbewegbar ist, und mit in der Mantelfläche des Steuerkolbens vorgesehenen Rücklaufnuten, durch die die Eintrittsöffnungen zeitsynchron mit ihrer Absperrung von der Mischkammer mit Rücklaufleitungen verbindbar sind, wobei die zwischen den Rücklaufnuten liegende Mantelfläche des Steuerkolbens mit voneinander getrennten Vertiefungen versehen ist.

Es ist eine Mischvorrichtung der eingangs genannten Art bekannt, bei der zwischen den Rücklaufnuten Längsnuten vorgesehen sind, in die Komponentengemisch eintreten kann, das dort dann gegebenenfalls ausreagiert. Diese Längsnuten und das gegebenenfalls ausreagierende Komponentengemisch dienen der Abdichtung zwischen den Rücklaufnuten (DE-C3-2 117 533).

Bei derartigen Mischvorrichtungen sind der Steuerkolben und das die Mischkammer enthaltende Gehäuse aus Stahl hergestellt. Die Bewegungen des Kolbens erfolgen mit hoher Geschwindigkeit und mit hoher Frequenz. Die Drücke in den Komponentenleitungen sind hoch und nicht immer vollständig gleich. Das Spiel zwischen Kolben und Zylinder muss möglichst klein gehalten werden, um einen Übertritt aus dem Bereich der einen Komponente in den Bereich der anderen Komponente zu verhindern. Hierdurch bedingt, kann es zum Fressen zwischen Steuerkolben und Zylinder, d.h. Mischkammerwandung, kommen. Wenn ein derartiges Festfressen auftritt, das zu einem vollständigen Festfressen führen kann, wird die gesamte Vorrichtung unbrauchbar.

Der Erfindung liegt nun die Aufgabe zugrunde, eine Mischvorrichtung der eingangs genannten Art zu schaffen, bei der ein Festfressen des Steuerkolbens wirksam verhindert wird.

Diese Aufgabe wird nach der Erfindung dadurch gelöst, dass die Vertiefungen in Bewegungsrichtung des Steuerkolbens gesehen, sich quer dazu überlappen.

Die Vertiefungen, die vorzugsweise als Schlitze oder auch als Sacklöcher ausgebildet sein können, wirken einem möglichen Fressen sehr wirksam entgegen. Dieses lässt sich durch folgende vorteilhafte Wirkungen begründen:

1. Die aufeinander gleitenden metallischen Flächen werden verringert.

2. Die Reibfläche des Kolbens wird durch die Vertiefungen unterbrochen, so dass der Tendenz des Fressens entgegengewirkt wird. Kommt es zum Fressen, so wird dieses sofort durch ein Abscheren oder Abreiben der Fressspuren durch die einander überlappenden Vertiefungen unterbrochen.

3. Die Vertiefungen können Komponentengemisch aufnehmen, das als Schmiermittel wirken kann. Wenn das Komponentengemisch ausreagiert, so hat auch das Reaktionsprodukt eine gewisse Schmier- oder Gleitwirkung, da auf der metallischen Zylinderfläche ein nichtmetallischer Stoff, nämlich das Reaktionsgemisch, gleitet.

4. Wenn es zum Ausreagieren von Komponenten in den Vertiefungen kommt, so ist die Verankerung des Reaktionsproduktes sehr gut, da senkrecht zur Bewegungsrichtung des Kolbens verlaufende Flächen zur Verfügung stehen, die das Reaktionsprodukt festhalten. Die Oberfläche, an der das Reaktionsprodukt in den Vertiefungen haftet, ist verhältnismässig gross, so dass die Klebewirkung für einen guten Sitz sorgt.

5. Insbesondere dann, wenn die Vertiefungen als Schlitze oder Taschen ausgebildet sind, die quer zur Bewegungsrichtung des Steuerkolbens und zumindest bis in die Nähe der Rücklaufnuten verlaufen, so wird hierdurch die Ausbildung eines Reaktionsproduktes unterstützt, da die Komponenten in die einzelnen Schlitze mit einem solchen Mischungsverhältnis gelangen, das für ein gutes Reaktionsprodukt im Sinne einer entsprechenden Rezeptur sorgt.

6. Gegebenenfalls wirken die Stege zwischen den Vertiefungen in dem Steuerkolben als Rührelemente in bezug auf das Komponentenmaterial in den Vertiefungen bzw. Taschen.

Erfindungsgemäss ist es auch möglich, die Vertiefungen in Längsrichtung des Steuerkolbens bis in den Bereich für die Hydraulik verlaufen zu lassen, die den Steuerkolben auf und ab bewegt, wodurch die Dichtwirkung in diesem Bereich unterstützt wird. Hierdurch wird wirksam verhindert, dass Hydraulikmedium in den Bereich der Mischkammer vordringen kann.

Wenn die Schlitze oder Taschen abwechselnd mit den einander gegenüberliegenden Rücklaufnuten verbunden sind, so wird abwechselnd ein direkter Komponenteneintritt ermöglicht, und da die Schlitze dicht beieinander liegen und sich überlappen, kann hierdurch eine rezeptgetreue Vermischung und die entsprechende Ausbildung eines Reaktionsproduktes sichergestellt werden.

Schliesslich ist es noch möglich, in die Vertiefungen ein Fremdschmiermittel von aussen einzubringen. Dieses kann durch getrennte Bohrungen im Mischkammergehäuse geschehen. In diesem Falle kann das Schmiermittel so ausgewählt werden, wie es für die erwünschte technische Wirkung besonders vorteilhaft ist.

Weitere Vorteile und Einzelheiten der Erfindung werden im folgenden unter Hinweis auf die Zeichnung anhand verschiedener Ausführungsbeispiele näher erläutert.

Es zeigt:

Fig. 1 einen schematischen Schnitt durch eine Mischvorrichtung nach der Erfindung mit dem Steuerkolben in Schliess- und Rücklaufstellung;

Fig. 2 einen Schnitt gemäss der Linie A–A der Fig. 1;

Fig. 3 eine Teilansicht eines Steuerkolbens mit einer anderen Ausführungsform der Vertiefungen und

Fig. 4 noch eine abgewandelte Ausführungsform.

Die in der Zeichnung dargestellte Mischvorrichtung besteht aus einem Gehäuse 1, in dem die den Zylinder bildende Mischkammer vorgesehen ist, die einen im Querschnitt angepassten Steuerkolben 2 aufnimmt.

Vorlaufleitungen 5 und 6 sind über Pumpen mit Vorratsbehältern für die Komponenten verbunden. Rücklaufleitungen 3 und 4 führen zurück zu den Vorratsbehältern.

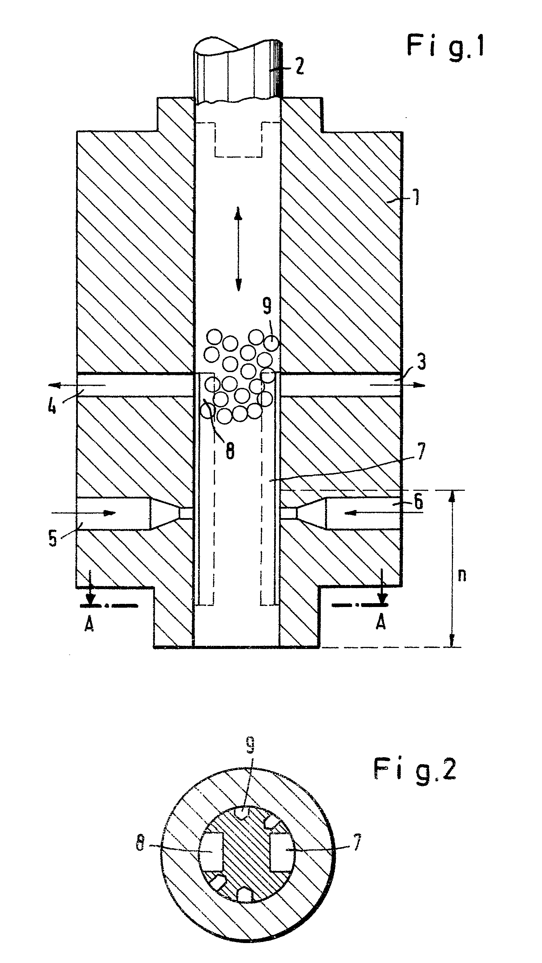

In dem Steuerkolben 2 sind Rücklaufnuten 7 und 8 ausgebildet, die in der Schliessstellung (siehe Fig. 1) des Steuerkolbens 2 die Vorlaufleitungen 5 und 6 mit den zugehörigen Rücklaufleitungen 3 und 4 verbinden.

Die Mantelfläche des Steuerkolbens 2 ist im Bereich der Rücklaufnuten 7 und 8 und in Längsrichtung über diesen Bereich hinaus mit Sacklochbohrungen 9 versehen, die die Vertiefungen bilden.

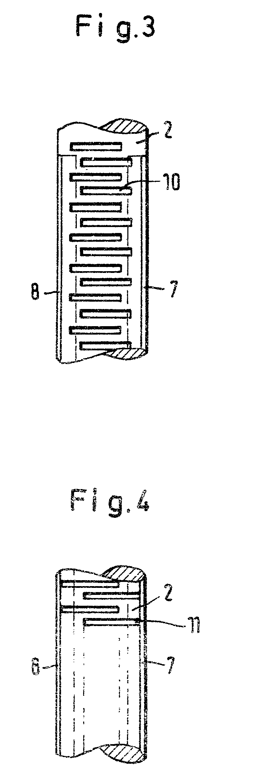

Bei der Ausführungsform nach Fig. 3 werden die Vertiefungen durch Schlitze oder Taschen 10 gebildet, die einander überlappen und gegeneinander in Richtung auf die Rücklaufnuten versetzt sind.

Bei der Ausführungsform nach Fig. 4 sind die Schlitze oder Taschen 11 abwechselnd mit den Rücklaufnuten verbunden.

Die verschiedenen Vertiefungen können auch vor der ersten zweckgebundenen Inbetriebnahme mit einem speziellen Material von aussen gefüllt werden, das eine entsprechende Schmierwirkung hat. Dieses Material muss nicht unbedingt flüssig sein. Es ist jeder Zustand zwischen flüssig und fest denkbar. Gute Gleiteigenschaften des in den Vertiefungen vorhandenen Materials sind günstig, um das Fressen wirksam zu verhindern.

Im normalen Betrieb arbeitet die Mischvorrichtung so, dass der Steuerkolben 2 für jeden Mischvorgang oder Schuss soweit zurückgezogen wird, dass die Vorlaufleitungen 5 und 6 in die dann freie Mischkammer münden, die Rücklaufleitungen 3 und 4 aber durch das vordere Ende des Steuerkolbens verschlossen sind. Ist ein solcher Schuss beendet, wird der Steuerkolben 2 in die in Fig. 1 gezeigte Stellung vorgeschoben, wobei er die Mischkammer reinigt und gleichzeitig sicherstellt, dass die Komponenten ohne miteinander zu reagieren durch die Rücklaufleitungen zurück in den Vorratsbehälter strömen.

## Patentansprüche

1. Mischvorrichtung für miteinander chemisch reagierende, vorzugsweise Polyurethan bildende, flüssige Komponenten, mit einer Mischkammer, die Eintrittsöffnungen (5, 6) für die einzelnen Komponenten und eine Austrittsöffnung für das Komponentengemisch besitzt, mit einem in der Mischkammer angeordneten und ihrem Querschnitt angepassten Steuerkolben (2), der aus einer die Eintrittsöffnungen (5, 6) offenlassenden Stellung bis in den Bereich der Austrittsöffnung, dabei die Eintrittsöffnungen (5, 6) gegenüber der Mischkammer absperrend, hin und her bewegbar ist, und mit in der Mantelfläche des Steuerkolbens (2) vorgesehenen Rücklaufnuten (7, 8), durch die die Eintrittsöffnungen (5, 6) zeitsynchron mit ihrer Absperrung von der Mischkammer mit Rücklaufleitungen (3, 4) verbindbar sind, wobei die zwischen den Rücklaufnuten (7, 8) liegende Mantelfläche des Steuerkolbens (2) mit voneinander getrennten Vertiefungen (9, 10, 11) versehen ist, dadurch gekennzeichnet, dass die Vertiefungen (9, 10, 11) in Bewegungsrichtung des Steuerkolbens (2) gesehen, sich quer dazu überlappen.

2. Mischvorrichtung nach Anspruch 1, dadurch gekennzeichnet, dass die Vertiefungen senkrecht zur Bewegungsrichtung des Steuerkolbens (2) verlaufende Schlitze (10, 11) sind.

3. Mischvorrichtung nach Anspruch 2, dadurch gekennzeichnet, dass die Schlitze (11) abwechselnd mit den einander gegenüberliegenden Rücklaufnuten (7, 8) verbunden sind und einander im mittleren Bereich der zwischen den Rücklaufnuten liegenden Mantelfläche des Steuerkolbens (2) überlappen.

4. Mischvorrichtung nach Anspruch 1, dadurch gekennzeichnet, dass die Vertiefungen Sacklochbohrungen (9) sind.

## Claims

1. Apparatus for mixing mutual chemically reacting fluid components, particulary for producing polyurethane having a mixing chamber with inlet openings (5, 6) for the individual components and an outlet opening for the mixture of the components, a control piston (2) positioned in the mixing chamber and accommodated to the cross section of the mixing chamber, the control piston is reciprocable between a position in which the inlet openings (5, 6) are open and a position in the area of the outlet opening so that the inlet openings are closed with respect to the mixing chamber, and recycling grooves (7, 8) provided in the outer surface of the control piston (2), which recycling grooves connecting the inlet openings (5, 6) synchronously with the closure from the mixing chamber with recycling ducts (3, 4), the outer surface of the control piston (2) is between the recycling grooves (7, 8) provided with recesses seperated from each other, characterized in that the recesses (9, 10) overlapping each other in the direction of movement of the control piston (2).

2. Apparatus according to claim 1, characterized in that the recesses are slots (10) which are positioned vertically into the direction of movement of the control piston (2).

3. Apparatus according to claim 2, characterized in that the slots (10) are connected alternatively with the recycling grooves (7, 8) positioned opposite to each other and in that the slots (10) are overlapping each other in the central area of the outer surface of the control piston (2) between the recycling grooves (7, 8).

4. Apparatus according to claim 1, characterized in that the recesses are blind holes (9).

## Revendications

1. Dispositif mélangeur pour composants liquides réagissant chimiquement, de préférence pour composants formant des polyuréthanes, qui comprend une chambre de mélange, laquelle présente des ouvertures d'entrée (5, 6) pour les composants individuels et une ouverture de sortie pour le mélange de composants, un piston de distribution (2) disposé dans la chambre de mélange et adapté à sa section, lequel peut se déplacer en va-et-vient d'une position qui démasque les ouvertures d'entrée (5, 6) jusque dans la région de l'ouverture de sortie, en isolant à ce moment les ouvertures d'entrée (5, 6) de la chambre de mélange, et des rainures de retour (7, 8) prévues dans la surface latérale du piston de distribution (2) par lesquelles les ouvertures d'entrée (5, 6) peuvent être reliées à des conduits de retour (3, 4) en synchronisme dans le temps avec leur isolement vis-à-vis de la chambre de mélange, la surface latérale du piston de distribution (2) qui se trouve entre les rainures de retour (7, 8) étant munie d'évidements (9, 10, 11) séparés les uns des autres, caractérisé en ce que, considérés dans le sens du mouvement du piston de distribution (2), les évidements (9, 10, 11) se recouvrent transversalement à cette direction.

2. Dispositif mélangeur suivant la revendication 1, caractérisé en ce que les évidements sont des fentes (10, 11) qui s'étendent perpendiculairement à la direction du mouvement du piston de distribution (2).

3. Dispositif mélangeur suivant la revendication 2, caractérisé en ce que les fentes (11) sont reliées en alternance aux rainures de retour (7, 8) qui sont l'une à l'opposé de l'autre et se recouvrent dans la région centrale de la surface latérale du piston de distribution (2) qui est située entre les rainures de retour.

4. Dispositif mélangeur suivant la revendication 1, caractérisé en ce que les évidements sont des trous borgnes (9).

# Fi g.1

# Fi g.2

# Fig.3

# Fig.4